# EUROPEAN PATENT APPLICATION

(11) **EP 3 110 046 A1**
(43) Date of publication of application: **28.12.2016**
(21) Application number: 14886335.0
(22) Date of filing: 16.07.2014
(51) Int. Cl.: H04B 17/00, H04W 24/02, H04L 1/00

(54) **METHOD AND APPARATUS FOR CHANNEL STATE INFORMATION MEASUREMENT**

(30) Priority: 21.03.2014 CN 201410109688
(71) Applicant: ZTE Corporation, Shenzhen, Guangdong 518057 (CN)
(72) Inventor: LI, Yu Ngok, Shenzhen Guangdong 518057 (CN); LI, Weimin, Shenzhen Guangdong 518057 (CN); LIANG, Chunli, Shenzhen Guangdong 518057 (CN); ZHANG, Wenfeng, Shenzhen Guangdong 518057 (CN)
(74) Representative: Awapatent AB
(86) International application number: PCT/CN2014/082353
(87) International publication number: WO 2015/139389

(57) **Abstract**

The embodiments of the present invention provide a method and apparatus for measuring channel state information, wherein the method includes: a terminal device determining one or more downlink subframes which are located before a subframe where aperiodic Channel State Information (CSI) report trigger information is located and belong to a specified subframe group to be CSI reference resources for the specified subframe group; and the terminal device acquiring a CSI measurement result on the CSI reference resources and generating a CSI report corresponding to the specified subframe group.

## Description

### Technical Field

The present invention relates to the field of mobile communications, and in particular, to a method and apparatus for measuring Channel State Information (CSI for short).

### Background of the Related Art

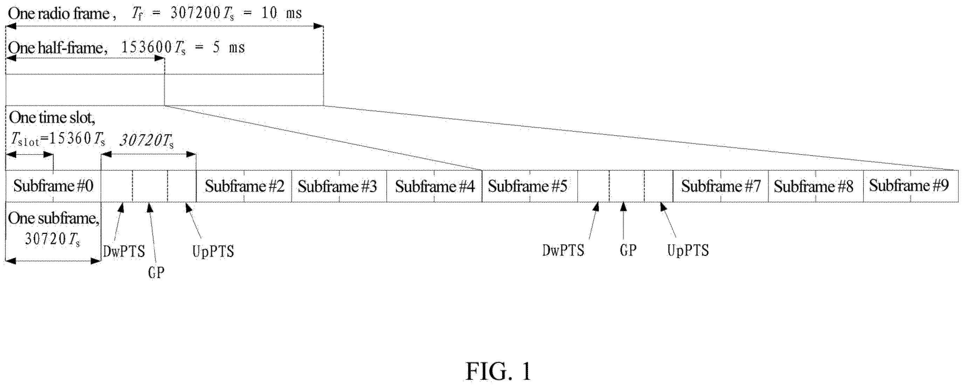

A frame structure in a Long Term Evolution (LTE) Time Division Duplex (TDD) mode is shown in Fig. 1. A radio frame of 10ms comprises two half frames with a length of 5ms, and each half frame is composed of 5 subframes with a length of 1ms. An uplink-downlink configuration supported by the frame structure is shown in table 1, wherein D represents that a subframe is used for downlink transmission, U represents that a subframe is used for uplink transmission, S represents a special subframe which comprises three special time slots, i.e., a Downlink Pilot Time Slot (DwPTS), a Guard Period (GP) and an Uplink Pilot Time Slot (UpPTS). A base station of a cell (evolved Node B (eNB)) transmits information of the uplink-downlink configuration to a terminal through a system broadcast message SIB1.

**Table 1**

| Uplink-downlink configuration | Downlink-to-uplink switch point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | s | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | s | U | U | D |

TDD enhanced Interference Management and Traffic Adaptation (eIMTA) is a system performance enhancement technology introduced in an LTE TDD system, which allows a base station to dynamically or semi-statically adjust an uplink-downlink configuration according to a change of a traffic load of a cell thereof to match with the change of the traffic load of the cell and satisfy requirements for the traffic load of the cell, thereby improving the uplink and downlink throughput performance of the system and the whole performance of the system. Wherein, the base station transmits information of the adjusted uplink-downlink configuration to a terminal through a downlink control channel (for example, Physical Downlink Control Channel (PDCCH)).

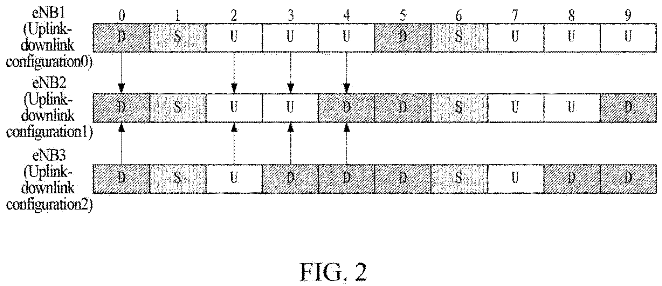

When a base station flexibly adjusts an uplink-downlink configuration according to a traffic load condition of a cell thereof, as traffic load conditions of different cells are different, different base stations may use different uplink-downlink configurations. Then, when various base stations implement uplink and downlink transmission, interference conditions suffered on different subframes may be obviously different. As shown in Fig. 2, eNB1, eNB2 and eNB3 are three base stations in one area, and use uplink-downlink configuration 0, uplink-downlink configuration 1 and uplink-downlink configuration 2 respectively according to traffic load conditions of respective cells. Then, by taking the eNB2 downlink transmission as an example, when the eNB2 implements downlink transmission on subframe 0, the eNB2 may suffer downlink interferences which are generated by downlink transmission implemented by the eNB1 and the eNB3 on corresponding subframes, and when the eNB2 implements downlink transmission on subframe 4, the eNB2 may suffer an uplink interference which is generated by uplink transmission implemented by the eNB1 on a corresponding subframe and may suffer a downlink interference which is generated by downlink transmission implemented by the eNB3 on a corresponding subframe. Similarly, by taking the eNB2 uplink transmission as an example, when the eNB2 implements uplink transmission on subframe 2, the eNB2 may suffer uplink interferences which are generated by uplink transmission implemented by the eNB1 and the eNB3 on corresponding subframes, and when the eNB2 implements uplink transmission on subframe 3, the eNB2 may suffer an uplink interference which is generated by uplink transmission implemented by the eNB1 on a corresponding subframe and may suffer a downlink interference which is generated by downlink transmission implemented by the eNB3 on a corresponding subframe.

As interference conditions suffered on different subframes may be obviously different, the TDD eIMTA supports a mechanism of implementing subframe grouping CSI measurement reporting for downlink subframes, to achieve a purpose of improving the downlink adaption effect and enhancing the downlink throughput performance of the system. In this mechanism, the base station may semi-statically divide potential downlink subframes (including special subframes) in a radio frame into two subframe groups, so that the terminal implements periodic or aperiodic CSI measurement reporting for the two subframe groups respectively. In this way, the base station may acquire CSI information respectively corresponding to the two subframe groups for implementing downlink adaption transmission on the two subframe groups respectively.

With respect to the aperiodic CSI measurement reporting, when the terminal receives CSI request indication information for triggering an aperiodic CSI report in a PDCCH of subframe n, the terminal acquires a CSI measurement result on CSI reference resource subframes, and implements aperiodic CSI reporting on a Physical Uplink Shared Channel (PUSCH) of subframe m=n+k, where a value of k is preset by a system.

When the subframe grouping aperiodic CSI reporting is implemented, the related technology supports that the terminal determines reported CSI of a corresponding subframe group according to a subframe group to which the subframe n (i.e., a subframe where the PDCCH which carries the CSI request indication information is located) belongs. In the TDD eIMTA, as different base stations may flexibly adjust uplink-downlink configurations according to traffic load conditions of cells thereof, the PDCCH which carries the CSI request indication information can only be transmitted on a downlink subframe or a special subframe in an uplink-downlink configuration notified through SIB1, and these subframes may be divided into the same subframe group. Then, according to the related technology, aperiodic CSI reporting of another subframe group cannot be triggered. With respect to this problem, the current optional technical solution comprises that the terminal determines CSI of which subframe group is reported according to the subframe n where the PDCCH which carries the CSI request indication information is located; or the terminal determines CSI of which subframe group is reported according to the subframe m where the aperiodic CSI reporting is implemented; or the terminal determines CSI of which subframe group is reported according to indication signaling in the PDCCH.

With respect to the CSI reference resources, when transmission modes 1-8 and a transmission mode 9 which is not configured with a precoding matrix indication and rank indication report parameters are used, the terminal implements CSI measurement based on Cell-specific Reference Signals (CRSs). The related technology supports that the terminal uses the subframe n as a CSI reference resource, and the terminal acquires a CSI measurement result on the subframe. In the TDD eIMTA, similarly, as different base stations may flexibly adjust uplink-downlink configurations according to traffic load conditions of cells thereof, the PDCCH which carries the CSI request indication information can only be transmitted on a downlink subframe or a special subframe in an uplink-downlink configuration notified through SIB1, and these subframes may be divided into the same subframe group. Then, according to the related technology, with respect to the above transmission modes 1-9, if the terminal uses the subframe n as a CSI reference resource, the terminal cannot acquire a CSI measurement result corresponding to another subframe group, and thus the terminal cannot effectively implement aperiodic CSI reporting for this subframe group. With respect to this problem, currently there is no effective solution.

When a transmission mode 10 is used, the terminal supports to configure one or more CSI processes for CSI measurement, and with respect to each CSI process, there is a CSI Reference Signal (CSI-RS) resource and a CSI Interference Measurement (CSI-IM) resource associated with each CSI process, and the terminal may use a corresponding subframe as a CSI reference resource, implement channel measurement based on CSI-RS resources, and implement interference measurement based on CSI-IM resources to acquire a CSI measurement result, wherein the CSI-RS resources are non-zero power CSI-RSs, and the CSI-IM resources are zero power CSI-RSs. In the related technology, the CSI-RS configuration comprises Resource Element (RE) location mapping and CSI-RS subframe configuration, and the CSI-RS subframe configuration comprises a CSI-RS period and a CSI-RS subframe offset, wherein the CSI-RS period comprises 5, 10, 20, 40 and 80ms. The related technology also specifies that the terminal does not expect to receive a CSI-IM resource configuration which cannot completely overlap with a zero power CSI-RS resource configuration which can be configured by the system for the terminal. In the TDD eIMTA, when the transmission mode 10 is used and subframe grouping CSI measurement reporting is implemented, according to the related technology, the terminal can only acquire a CSI measurement result for a subframe group through the CSI-IM resources, and cannot acquire a CSI measurement result for another subframe group. By taking the base station eNB2 in Fig. 2 as an example, the eNB2 divides downlink subframes 0, 1, 5 and 6 into subframe group 1 and divides downlink subframes 4 and 9 into subframe group 2. According to the related technology, CSI-IM resources configured by the eNB2 may be located on the subframes 0 and 5, or may be located on the subframes 1 and 6, or may be located on the subframes 4 and 9. That is, the CSI-IM resources can only be distributed on subframes of one subframe group of them. Then, when the terminal needs to report CSI of another subframe group, the terminal cannot acquire corresponding CSI reference resources, and thus cannot acquire a corresponding CSI measurement result. With respect to this problem, currently there is no effective solution.

### Summary of the Invention

Embodiments of the present invention provide a method and apparatus for measuring channel state information, which solves the problem that a terminal cannot effectively determine CSI reference resources when implementing subframe grouping aperiodic CSI reporting due to flexible adjustment of an uplink-downlink configuration by a base station.

A method for measuring CSI comprises:
a terminal device determining one or more downlink subframes which are located before a subframe where aperiodic CSI report trigger information is located and belong to a specified subframe group to be CSI reference resources for the specified subframe group; and
the terminal device acquiring a CSI measurement result on the CSI reference resources and generating a CSI report corresponding to the specified subframe group.

Preferably, a terminal device determining one or more downlink subframes which are located before a subframe where aperiodic CSI report trigger information is located and belong to a specified subframe group to be CSI reference resources for the specified subframe group comprises:
the terminal device determining a downlink subframe with a subframe number of n-i which belongs to a specified subframe group to be a CSI reference resource for the specified subframe group,
wherein n is a subframe number of a subframe where the aperiodic CSI report trigger information is located and i is an integer greater than or equal to a non-negative integer s.

Preferably, a radio frame where the downlink subframe with a subframe number of n-i is located and a radio frame where a downlink subframe with a subframe number of n is located are the same radio frame.

Preferably, the radio frame where the downlink subframe with a subframe number of n-i is located is a radio frame within a range of x radio frames before the radio frame where a downlink subframe with a subframe number of n is located, where x is an integer greater than or equal to 1.

Preferably, i is a minimum integer greater than or equal to the non-negative integer s.

Preferably, the non-negative integer s is predefined and set by a system or is configured by Radio Resource Control (RRC) signaling.

Preferably, the downlink subframes comprise downlink subframes D and special subframes S.

Preferably, the specified subframe group is a subframe group for which aperiodic CSI reporting needs to be implemented, which is determined by the terminal device according to a system predetermined rule.

The embodiments of the present invention further provide a method for measuring CSI, comprising:
a terminal device determining one or more downlink subframes which are located before an aperiodic CSI report subframe and in a same radio frame with a subframe where aperiodic CSI report trigger information is located and belong to a specified subframe group to be CSI reference resources for the specified subframe group; and
the terminal device acquiring a CSI measurement result on the CSI reference resources and generating a CSI report corresponding to the specified subframe group.

Preferably, a terminal device determining one or more downlink subframes which are located before an aperiodic CSI report subframe and in a same radio frame with a subframe where aperiodic CSI report trigger information is located and belong to a specified subframe group to be CSI reference resources for the specified subframe group comprises:
the terminal device determining a downlink subframe with a subframe number of m-j which is located in the same radio frame with the subframe where the aperiodic CSI report trigger information is located and belongs to the specified subframe group to be a CSI reference resource for the specified subframe group,
wherein m is a subframe number of an uplink subframe where the terminal implements aperiodic CSI reporting and j is an integer greater than or equal to a positive integer t.

Preferably, the j is a minimum integer greater than or equal to the positive integer t.

Preferably, the positive integer t is predefined and set by a system or is configured by Radio Resource Control (RRC) signaling.

Preferably, the downlink subframes comprise downlink subframes D and special subframes S.

Preferably, the specified subframe group is a subframe group for which aperiodic CSI reporting needs to be implemented, which is determined by the terminal device according to a system predetermined rule.

The embodiments of the present invention further provide a method for measuring CSI, comprising:
a base station configuring CSI interference measurement resources overlapped with two zero power CSI reference signal resource configurations for all CSI processes of a specified terminal device; and
the base station transmitting configuration information of the CSI interference measurement resources to the specified terminal device, for the specified terminal device to determine CSI reference resources and/or CSI interference measurement resources for the specified sub frame group.

Preferably, the CSI interference measurement resources overlapped with two zero power CSI reference signal resource configurations respectively correspond to different subframes or different sub frame groups.

Preferably, the different subframes belong to a same subframe group or belong to different sub frame groups.

Preferably, periods and/or subframe offsets of the two zero power CSI reference signal resource configurations are different.

Preferably, the method further comprises:
the base station transmitting information of the two zero power CSI reference signal resource configurations to the specified terminal device, for the specified terminal device to implement data transmission rate matching.

The embodiments of the present invention further provide an apparatus for measuring CSI, comprising:
a CSI reference resource determination module configured to determine one or more downlink subframes which are located before a subframe where aperiodic CSI report trigger information is located and belong to a specified subframe group to be CSI reference resources for the specified subframe group; and
a CSI report generation module configured to acquire a CSI measurement result on the CSI reference resources and generate a CSI report corresponding to the specified subframe group.

Preferably, the CSI reference resource determination module comprises:
a first resource determination unit configured to determine a downlink subframe with a subframe number of n-i which belongs to the specified subframe group to be a CSI reference resource for the specified subframe group,
wherein n is a subframe number of a subframe where the aperiodic CSI report trigger information is located and i is an integer greater than or equal to a non-negative integer s.

The embodiments of the present invention further provide an apparatus for measuring CSI, comprising:
a CSI reference resource determination module configured to determine one or more downlink subframes which are located before an aperiodic CSI report sub frame and in a same radio frame with a subframe where aperiodic CSI report trigger information is located and belong to a specified subframe group to be CSI reference resources for the specified subframe group; and
a CSI report generation module configured to acquire a CSI measurement result on the CSI reference resources and generate a CSI report corresponding to the specified subframe group.

Preferably, the CSI reference resource determination module comprises:
a second resource determination unit configured to determine a downlink subframe with a subframe number of m-j which is located in the same radio frame as the subframe where aperiodic CSI report trigger information is located and belongs to the specified subframe group to be a CSI reference resource for the specified subframe group,
wherein m is a subframe number of an uplink subframe where the terminal implements aperiodic CSI reporting and j is an integer greater than or equal to a positive integer t.

The embodiments of the present invention further provide an apparatus for measuring CSI, comprising:
a resource configuration module configured to configure CSI interference measurement resources overlapped with two zero power CSI reference signal resource configurations for all CSI processes of a specified terminal device; and
a configuration issuing module configured to transmit configuration information of the CSI interference measurement resources to the specified terminal device, for the specified terminal device to determine CSI reference resources and/or CSI interference measurement resources for the specified subframe group.

Preferably, the configuration issuing module is further configured to transmit information of the two zero power CSI reference signal resource configurations to the specified terminal device, for the specified terminal device to implement data transmission rate matching.

The embodiments of the present invention further provide a computer program comprising program instructions, which, when executed by a terminal device, enable the terminal device to implement the above method.

The embodiments of the present invention further provide a computer program comprising program instructions, which, when executed by a base station, enable the base station to implement the above method.

The embodiments of the present invention further provide a carrier carrying any of the above computer programs.

The embodiments of the present invention achieve the object that the terminal effectively acquires CSI measurement results corresponding to different subframe groups and implements CSI reporting, and solve the problem that a terminal cannot effectively determine CSI reference resources when implementing subframe grouping aperiodic CSI reporting due to flexible adjustment of an uplink-downlink configuration by a base station.

### Brief Description of Drawings

Fig. 1 is a diagram of a frame structure in an LTE system TDD mode;
Fig. 2 is a diagram of interference conditions on different subframes in the related technology;
Fig. 3 is a schematic diagram of a terminal implementing subframe grouping aperiodic CSI reporting in embodiment one of the present invention;
Fig. 4 is a schematic diagram of a terminal implementing subframe grouping aperiodic CSI reporting in embodiment two of the present invention;
Fig. 5 is a schematic diagram of a terminal implementing subframe grouping aperiodic CSI reporting in embodiment three of the present invention;
Fig. 6 is a schematic diagram of a terminal implementing subframe grouping aperiodic CSI reporting in embodiment four of the present invention;
Fig. 7 is a schematic diagram of a terminal implementing subframe grouping aperiodic CSI reporting in embodiments five and seven of the present invention;
Fig. 8 is a schematic diagram of a terminal implementing subframe grouping aperiodic CSI reporting in embodiment six of the present invention;
Fig. 9 is a schematic diagram of a base station implementing CSI interference measurement resource configuration in embodiment eight of the present invention;
Fig. 10 is a schematic diagram of a base station implementing CSI interference measurement resource configuration in embodiment nine of the present invention;
Fig. 11 is a structural diagram of an apparatus for measuring channel state information provided by embodiment ten of the present invention;
Fig. 12 is a structural diagram of another apparatus for measuring channel state information provided by embodiment ten of the present invention; and
Fig. 13 is a structural diagram of a further apparatus for measuring channel state information provided by embodiment ten of the present invention.

### Preferred Embodiments of the Invention

With respect to the CSI reference resources, when transmission modes 1-8 and a transmission mode 9 which is not configured with a precoding matrix indication and rank indication report parameters are used, the terminal implements CSI measurement based on a cell level reference signal CRS. The related technology supports that the terminal uses the subframe n as a CSI reference resource, and the terminal acquires a CSI measurement result on the subframe. In the TDD eIMTA, as different base stations may flexibly adjust uplink-downlink configurations according to traffic load conditions of cells thereof, the PDCCH which carries the CSI request indication information can only be transmitted on a downlink subframe or a special subframe in an uplink-downlink configuration notified through SIB1, and these subframes would be divided into the same subframe group. Then, according to the related technology, with respect to the above transmission modes 1-9, if the terminal uses the subframe n as a CSI reference resource, the terminal cannot acquire a CSI measurement result corresponding to another subframe group, and thus the terminal cannot effectively implement aperiodic CSI reporting for this subframe group. With respect to this problem, currently there is no effective solution.

When a transmission mode 10 is used, the terminal supports to configure one or more CSI processes for CSI measurement, and with respect to each CSI process, there is a CSI-RS resource and a CSI-IM resource associated with each CSI process, and the terminal may use a corresponding subframe as a CSI reference resource, implement channel measurement based on CSI-RS resources, and implement interference measurement based on CSI-IM resources to acquire a CSI measurement result, wherein the CSI-RS resources are non-zero power CSI-RSs, and the CSI-IM resources are zero power CSI-RSs. In the related technology, the CSI-RS configuration comprises RE location mapping and CSI-RS subframe configuration, and the CSI-RS subframe configuration comprises a CSI-RS period and a CSI-RS subframe offset, wherein the CSI-RS period comprises 5, 10, 20, 40 and 80ms. The related technology also specifies that the terminal does not expect to receive a CSI-IM resource configuration which cannot completely overlap with a zero power CSI-RS resource configuration which can be configured by the system for the terminal. In the TDD eIMTA, when the transmission mode 10 is used and subframe grouping CSI measurement reporting is implemented, according to the related technology, the terminal can only acquire a CSI measurement result for a subframe group through the CSI-IM resources, and cannot acquire a CSI measurement result for another subframe group. By taking the base station eNB2 in Fig. 2 as an example, the eNB2 divides downlink subframes 0, 1, 5 and 6 into subframe group 1 and divides downlink subframes 4 and 9 into subframe group 2. According to the related technology, CSI-IM resources configured by the eNB2 may be located on the subframes 0 and 5, or may be located on the subframes 1 and 6, or may be located on the subframes 4 and 9. That is, the CSI-IM resources can only be distributed on subframes of one of subframe groups. Then, when the terminal needs to report CSI of another subframe group, the terminal cannot acquire corresponding CSI reference resources, and thus cannot acquire a corresponding CSI measurement result. With respect to this problem, currently there is no effective solution.

In order to solve the above problem, the embodiments of the present invention provide a method and apparatus for measuring channel state information. The embodiments of the present invention will be described in detail below in conjunction with accompanying drawings. It should be illustrated that, without conflict, the embodiments in the present application and the features in the embodiments can be combined randomly with each other.

### Embodiment one

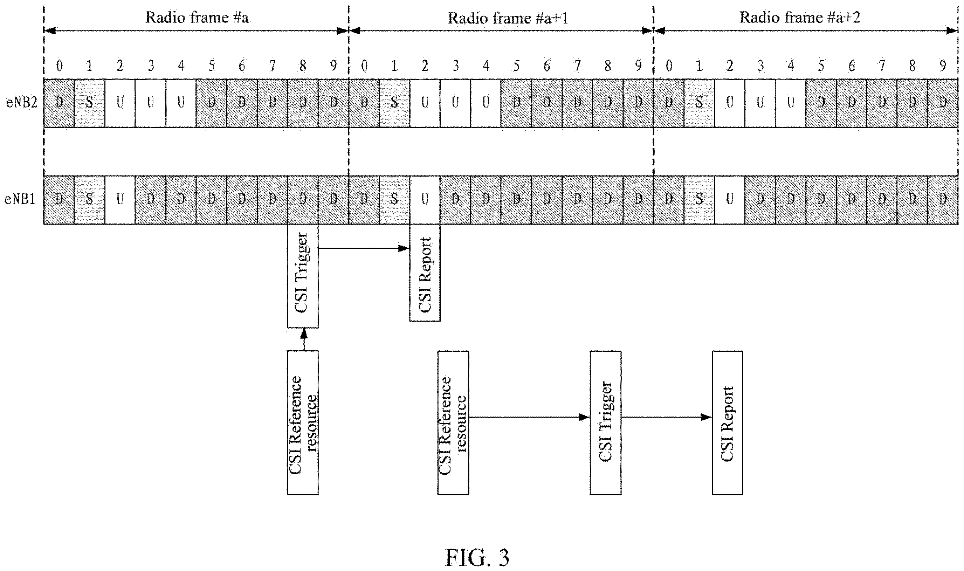

The embodiment of the present invention provides a method for measuring channel state information. The principle of implementing subframe grouping aperiodic CSI reporting using this method is shown in Fig. 3.

In the embodiment of the present invention, assuming that an uplink-downlink configuration transmitted by eNB1 to a terminal through SIB1 is uplink-downlink configuration 3, and the eNB1 adjusts the used uplink-downlink configuration according to a current traffic load condition of a cell thereof to be uplink-downlink configuration 5; and assuming that eNB2 is a strong interference source cell of a downlink of the eNB1, and an uplink-downlink configuration which is currently used by the eNB2 is the uplink-downlink configuration 3.

The eNB1 divides downlink subframes (including special sub frames) into two subframe groups. Subframes {0, 1, 5, 6, 7, 8, 9} belong to subframe group 1, and subframes {3, 4} belong to subframe group 2.

Assuming that the terminal receives aperiodic CSI report trigger information (for example, CSI request indication information) transmitted by the eNB1 over downlink subframe 8 of radio frame #a, and the terminal determines that aperiodic CSI reporting needs to be implemented for the subframe group 1 according to a rule predefined by the system (for example, the radio frame #a is an even frame).

Assuming that the terminal receives aperiodic CSI report trigger information transmitted by the eNB1 over downlink subframe 8 of radio frame #a+1, and the terminal determines that aperiodic CSI reporting needs to be implemented for the subframe group 2 according to a rule predefined by the system (for example, the radio frame #a+1 is an odd frame).

As the downlink subframe 8 which carries the aperiodic CSI report trigger information in the radio frame #a belongs to the subframe group 1, then, for the subframe group 1, the terminal may implement aperiodic CSI reporting according to the related technology, i.e., the terminal determines the subframe 8 in the radio frame #a to be a CSI reference resource for the sub frame group 1, acquires a CSI measurement result on the subframe, generates a CSI report corresponding to the subframe group 1, and transmits the report to the eNB1 over uplink subframe 2 of the radio frame #a+1.

As the downlink subframe 8 which carries the aperiodic CSI report trigger information in the radio frame #a+1 belongs to the subframe group 1, then, for the subframe group 2, the terminal implements aperiodic CSI reporting according to the solution in the embodiment of the present invention. Preferably, the terminal determines downlink subframe n-i belonging to the subframe group 2 to be a CSI reference resource for the subframe group 2, wherein subframe n is subframe 8 which carries aperiodic CSI report trigger information in the radio frame #a+1, and the system predefines and sets i to be equal to a non-negative integer s. Further, the system predefines and sets the non-negative integer s=5, or the non-negative integer s=5 is configured by RRC signaling. This is equivalent to that the terminal determines downlink subframe 3 which belongs to the subframe group 2 in the radio frame #a+1 to be a CSI reference resource for the subframe group 2, and then the terminal acquires a CSI measurement result on the subframe, generates a CSI report corresponding to the subframe group 2, and transmits the report to the eNB1 over the uplink subframe 2 of radio frame #a+2.

In the embodiment of the present invention, the system or the base station enables the terminal to acquire a CSI measurement result on an expected subframe before the subframe n where the aperiodic CSI report trigger information is located through parameter configuration. For example, the system or the base station considers that the downlink subframe 3 in the radio frame #a+1 which belongs to the subframe group 2 more suitably reflects the CSI information of the subframe group 2 according to related information, and then sets the subframe to be a subframe on which the terminal is expected to acquire the CSI measurement result which is used for CSI reporting.

It should be illustrated that for the subframe group 1, the terminal can similarly implement aperiodic CSI reporting according to the solution in the embodiment of the present invention, and the implementation process is similar to the above process of the terminal implementing aperiodic CSI reporting for the subframe group 2, and will not be repeated in the embodiment.

### Embodiment two

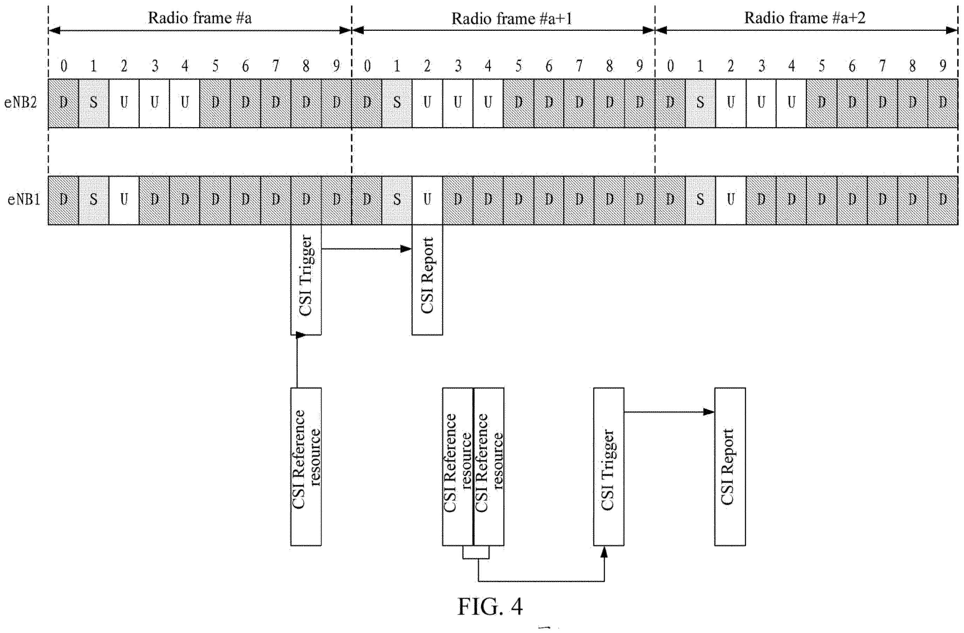

The embodiment of the present invention provides a method for measuring channel state information. The principle of implementing subframe grouping aperiodic CSI reporting using this method is shown in Fig. 4.

Assuming that an uplink-downlink configuration transmitted by eNB1 to a terminal through SIB1 is uplink-downlink configuration 3, and the eNB1 adjusts the used uplink-downlink configuration according to a current traffic load condition of a cell thereof to be uplink-downlink configuration 5; and assuming that eNB2 is a strong interference source cell of a downlink of the eNB1, and an uplink-downlink configuration which is currently used by the eNB2 is the uplink-downlink configuration 3.

The eNB1 divides downlink subframes (including special sub frames) into two subframe groups. Subframes {0, 1, 5, 6, 7, 8, 9} belong to subframe group 1, and subframes {3, 4} belong to subframe group 2.

Assuming that the terminal receives aperiodic CSI report trigger information transmitted by the eNB1 over downlink subframe 8 of radio frame #a, and the terminal determines that aperiodic CSI reporting needs to be implemented for the subframe group 1 according to a rule predefined by the system.

Assuming that the terminal receives aperiodic CSI report trigger information transmitted by the eNB1 over downlink subframe 8 of radio frame #a+1, and the terminal determines that aperiodic CSI reporting needs to be implemented for the subframe group 2 according to a rule predefined by the system.

As the downlink subframe 8 which carries the aperiodic CSI report trigger information in the radio frame #a belongs to the subframe group 1, then, for the subframe group 1, the terminal may implement aperiodic CSI reporting according to the related technology, i.e., the terminal determines the subframe 8 in the radio frame #a to be a CSI reference resource for the subframe group 1, and acquires a CSI measurement result on the subframe, generates a CSI report corresponding to the subframe group 1, and transmits the report to the eNB1 over uplink sub frame 2 of the radio frame #a+1.

As the downlink subframe 8 which carries the aperiodic CSI report trigger information in the radio frame #a+1 belongs to the subframe group 1, then, for the subframe group 2, the terminal implements aperiodic CSI reporting according to the solution in the embodiment of the present invention. Preferably, the terminal determines downlink subframe n-i belonging to the subframe group 2 to be a CSI reference resource for the subframe group 2, wherein subframe n is subframe 8 in the radio frame #a+1 which carries aperiodic CSI report trigger information, the system predefines i to be an integer which is greater than or equal to a non-negative integer s, and a radio frame where the downlink subframe n-i is located is the same radio frame as a radio frame where the subframe 8 is located. Further, the system predefines and sets the non-negative integer s=1, or the non-negative integer s=1 is configured by RRC signaling. As the subframe 8 is located on the radio frame #a+1, sub frames which satisfy the above condition comprise subframes 4 and 3 in the radio frame #a+1, and corresponding values of i are 4 and 5 respectively. Then the terminal determines sub frames 4 and 3 in the radio frame #a+1 which belong to the subframe group 2 to be CSI reference resources for the subframe group 2, and acquires CSI measurement results on the two subframes, implements averaging processing, generates a CSI report corresponding to the subframe group 2, and transmits the report to the eNB1 over the uplink subframe 2 of radio frame #a+2.

In the embodiment of the present invention, the terminal can acquire CSI measurement results on multiple CSI reference resource subframes, and after the averaging processing, a more reasonable CSI report can be provided to the base station.

### Embodiment three

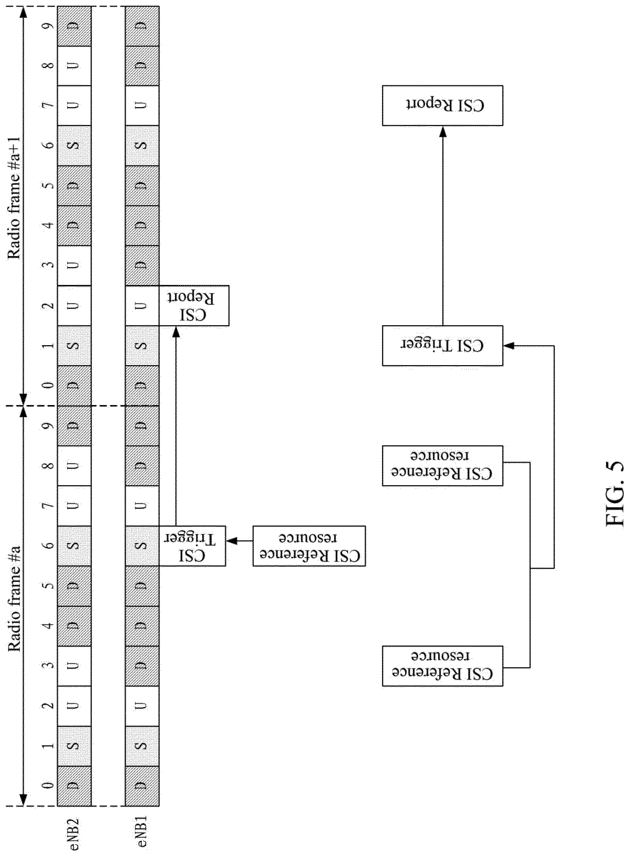

The embodiment of the present invention provides a method for measuring channel state information. The principle of implementing subframe grouping aperiodic CSI reporting using this method is shown in Fig. 5.

Assuming that an uplink-downlink configuration transmitted by eNB1 to a terminal through SIB1 is uplink-downlink configuration 1, and the eNB1 adjusts the used uplink-downlink configuration according to a current traffic load condition of a cell thereof to be uplink-downlink configuration 2; and assuming that eNB2 is a base station of a strong interference source cell of a downlink of the eNB1, and an uplink-downlink configuration which is currently used by the eNB2 is the uplink-downlink configuration 1.

The eNB1 divides downlink subframes (including special subframes) into two sub frame groups. Subframes {0, 1, 4, 5, 6, 9} belong to subframe group 1, and subframes {3, 8} belong to subframe group 2.

Assuming that the terminal receives aperiodic CSI report trigger information transmitted by the eNB1 over special subframe 6 of radio frame #a, and the terminal determines that aperiodic CSI reporting needs to be implemented for the subframe group 1 according to a rule predefined by the system (for example, the subframe 6 is an even subframe).

Assuming that the terminal receives aperiodic CSI report trigger information transmitted by the eNB1 over special subframe 1 of radio frame #a+1, and the terminal determines that aperiodic CSI reporting needs to be implemented for the subframe group 2 according to a rule predefined by the system (for example, the subframe 1 is an odd subframe).

As the special subframe 6 which carries the aperiodic CSI report trigger information in the radio frame #a belongs to the subframe group 1, then, for the subframe group 1, the terminal may implement aperiodic CSI reporting according to the related technology, i.e., the terminal determines the subframe 6 in the radio frame #a to be a CSI reference resource for the subframe group 1, and acquires a CSI measurement result on the subframe, generates a CSI report corresponding to the subframe group 1, and transmits the report to the eNB1 over uplink subframe 2 of the radio frame #a+1.

As the special subframe 1 which carries the aperiodic CSI report trigger information in the radio frame #a+1 belongs to the subframe group 1, then, for the subframe group 2, the terminal implements aperiodic CSI reporting according to the solution in the embodiment of the present invention. Preferably, the terminal determines downlink subframe n-i belonging to the subframe group 2 to be a CSI reference resource for the subframe group 2, wherein subframe n is subframe 1 in the radio frame #a+1 which carries aperiodic CSI report trigger information, the system predefines i to be an integer which is greater than or equal to a non-negative integer s, and a radio frame where the downlink subframe n-i is located is a radio frame before a radio frame where the subframe 1 is located. Further, the system predefines and sets the non-negative integer s=1, or the non-negative integer s=1 is configured by RRC signaling. As the subframe 1 is located on the radio frame #a+1, subframes in the radio frame #a before the radio frame #a+1 which satisfy the above condition comprise subframes 8 and 3, and corresponding values of i are 3 and 8 respectively. Then the terminal determines subframes 8 and 3 in the radio frame #a which belong to the subframe group 2 to be CSI reference resources for the subframe group 2, and acquires CSI measurement results on the two subframes, implements averaging processing, generates a CSI report corresponding to the subframe group 2, and transmits the report to the eNB1 over the uplink subframe 7 of radio frame #a+1.

In the embodiment of the present invention, the terminal can acquire CSI measurement results on multiple CSI reference resource subframes, and after the averaging processing, a more reasonable CSI report can be provided to the base station. Further, the solution according to the embodiment is further suitable for a condition that the eNB1 cannot determine subframe grouping in the radio frame where the subframe n which carries aperiodic CSI report trigger information is located, and thereby the eNB1 cannot determine which subframe in the radio frame is suitable to be used as a CSI reference resource for the subframe group 2, for example, the eNB1 does not know the uplink-downlink configuration of the base station of the strong interference source cell.

### Embodiment four

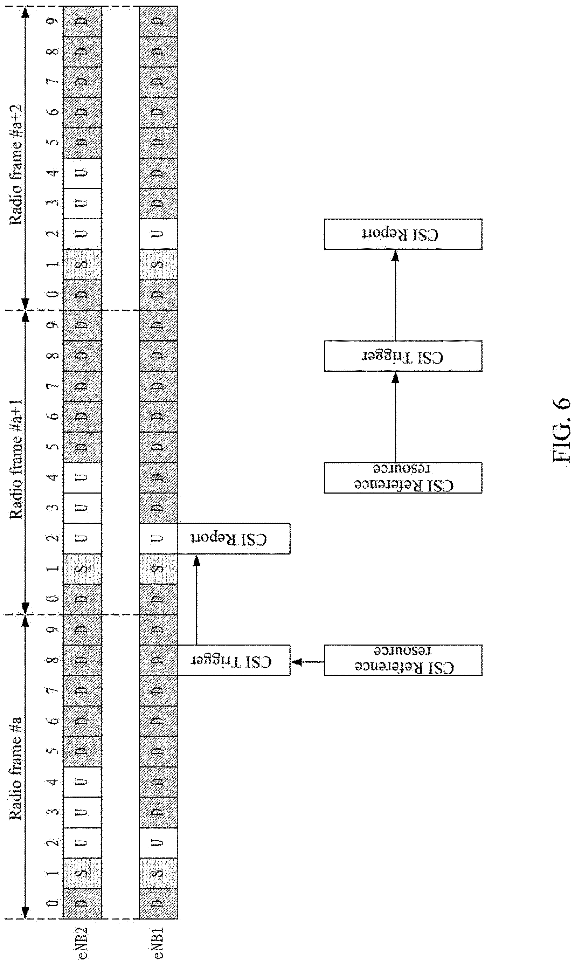

The embodiment of the present invention provides a method for measuring channel state information. The principle of implementing subframe grouping aperiodic CSI reporting using this method is shown in Fig. 6.

In the embodiment of the present invention, assuming that an uplink-downlink configuration transmitted by eNB1 to a terminal through SIB1 is uplink-downlink configuration 3, and the eNB1 adjusts the used uplink-downlink configuration according to a current traffic load condition of a cell thereof to be uplink-downlink configuration 5; and assuming that eNB2 is a strong interference source cell of a downlink of the eNB1, and an uplink-downlink configuration which is currently used by the eNB2 is the uplink-downlink configuration 3.

The eNB1 divides downlink subframes (including special subframes) into two sub frame groups. Subframes {0, 1, 5, 6, 7, 8, 9} belong to subframe group 1, and subframes {3, 4} belong to subframe group 2.

Assuming that the terminal receives aperiodic CSI report trigger information transmitted by the eNB1 over downlink subframe 8 of radio frame #a, and the terminal determines that aperiodic CSI reporting needs to be implemented for the subframe group 1 according to a rule predefined by the system.

Assuming that the terminal receives aperiodic CSI report trigger information transmitted by the eNB1 over downlink subframe 8 of radio frame #a+1, and the terminal determines that aperiodic CSI reporting needs to be implemented for the subframe group 2 according to a rule predefined by the system.

As the downlink subframe 8 which carries the aperiodic CSI report trigger information in the radio frame #a belongs to the subframe group 1, then, for the subframe group 1, the terminal may implement aperiodic CSI reporting according to the related technology, i.e., the terminal determines the subframe 8 in the radio frame #a to be a CSI reference resource for the subframe group 1, and acquires a CSI measurement result on the subframe, generates a CSI report corresponding to the subframe group 1, and transmits the report to the eNB1 over uplink subframe 2 of the radio frame #a+1.

As the downlink subframe 8 which carries the aperiodic CSI report trigger information in the radio frame #a+1 belongs to the subframe group 1, then, for the subframe group 2, the terminal implements aperiodic CSI reporting according to the solution in the embodiment of the present invention. Preferably, the terminal determines downlink subframe n-i belonging to the subframe group 2 to be a CSI reference resource for the subframe group 2, wherein subframe n is subframe 8 in the radio frame #a+1 which carries aperiodic CSI report trigger information, the system predefines i to be a minimum integer which is greater than or equal to a non-negative integer s. Further, the system predefines and sets the non-negative integer s=1, or the non-negative integer s=1 is configured by RRC signaling. As a downlink subframe which is closest to the subframe 8 and belongs to the subframe group 2 is the downlink subframe 4 in the radio frame #a+1, this is equivalent to i=4. Then the terminal determines the downlink subframe 4 in the radio frame #a+1 which belongs to the subframe group 2 to be a CSI reference resource for the subframe group 2, and acquires a CSI measurement result on the subframe, generates a CSI report corresponding to the subframe group 2, and transmits the report to the eNB1 over the uplink subframe 2 of radio frame #a+2.

In the embodiment of the present invention, the terminal determines a subframe which belongs to the subframe group 2 and is closest to the subframe where the aperiodic CSI report trigger information is located to be a CSI reference resource for the subframe group 2, the system or the base station doesn't need to acquire and set a subframe on which the terminal is expected to acquire a CSI measurement result, and the terminal also only needs to store a CSI measurement result on the subframe which belongs to the subframe group 2 and is closest to the subframe where the aperiodic CSI report trigger information is located, thereby reducing the overhead of the terminal storing CSI measurement results.

### Embodiment five

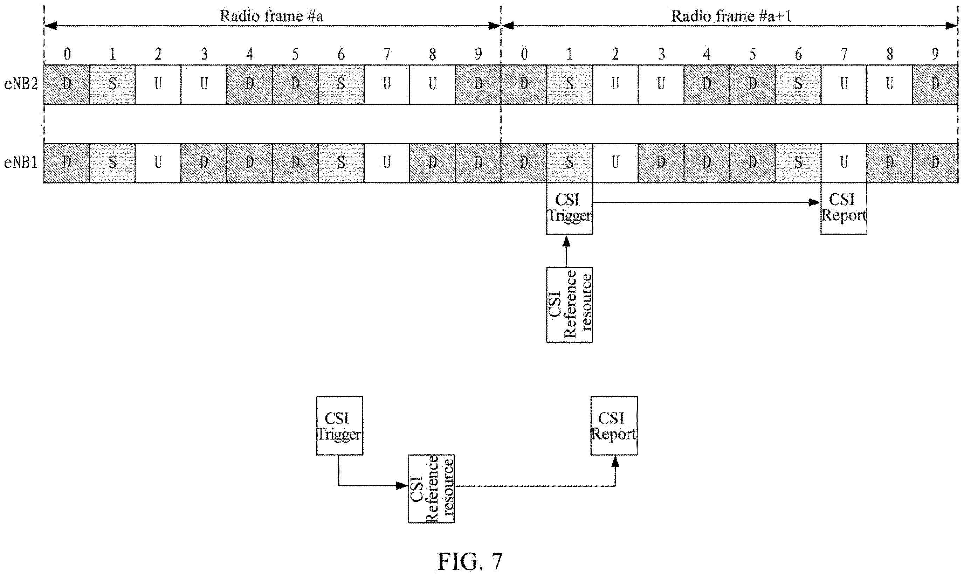

The embodiment of the present invention provides a method for measuring channel state information. The principle of implementing subframe grouping aperiodic CSI reporting using this method is shown in Fig. 7.

Assuming that an uplink-downlink configuration transmitted by eNB1 to a terminal through SIB1 is uplink-downlink configuration 1, and the eNB1 adjusts the used uplink-downlink configuration according to a current traffic load condition of a cell thereof to be uplink-downlink configuration 2; and assuming that eNB2 is a strong interference source cell of a downlink of the eNB1, and an uplink-downlink configuration which is currently used by the eNB2 is the uplink-downlink configuration 1.

The eNB1 divides downlink subframes (including special subframes) into two subframe groups. Subframes {0, 1, 4, 5, 6, 9} belong to subframe group 1, and subframes {3, 8} belong to subframe group 2.

Assuming that the terminal receives aperiodic CSI report trigger information transmitted by the eNB1 over special subframe 6 of radio frame #a, and the terminal determines that aperiodic CSI reporting needs to be implemented for the subframe group 2 according to a rule predefined by the system.

Assuming that the terminal receives aperiodic CSI report trigger information transmitted by the eNB1 over special subframe 1 of radio frame #a+1, and the terminal determines that aperiodic CSI reporting needs to be implemented for the subframe group 1 according to a rule predefined by the system.

As the special subframe 6 which carries the aperiodic CSI report trigger information in the radio frame #a belongs to the subframe group 1, then, for the subframe group 2, the terminal implements aperiodic CSI reporting according to the solution in the embodiment of the present invention. Preferably, the terminal determines downlink subframe m-j which is located in the same radio frame as subframe n where the aperiodic CSI report trigger information is located and belongs to the subframe group 2 to be a CSI reference resource for the subframe group 2, wherein subframe n is the special subframe 6 of the radio frame #a, the subframe m is an uplink subframe 2 in the radio frame #a+1 on which the terminal implements aperiodic CSI reporting, the system predefines and sets j to be equal to a positive integer t. Further, the system predefines and sets t=4, or t=4 is configured by RRC signaling. Then the terminal determines the downlink subframe 8 in the radio frame #a which satisfies the above conditions to be a CSI reference resource for the subframe group 2, and acquires a CSI measurement result on the subframe, generates a CSI report corresponding to the subframe group 2, and transmits the report to the eNB1 over the uplink subframe 2 of radio frame #a+1.

As the special subframe 1 which carries the aperiodic CSI report trigger information in the radio frame #a+1 belongs to the subframe group 1, then, for the subframe group 1, the terminal may implement aperiodic CSI reporting according to the related technology, i.e., the terminal determines the subframe 1 in the radio frame #a+1 to be a CSI reference resource for the subframe group 1, and acquires a CSI measurement result on the subframe, generates a CSI report corresponding to the subframe group 1, and transmits the report to the eNB1 over uplink subframe 7 of the radio frame #a+1.

In the embodiment of the present invention, the system or the base station enables the terminal to acquire a CSI measurement result on an expected subframe which is in the same radio frame with the subframe n where the aperiodic CSI report trigger information is located and has a certain subframe interval away from an aperiodic CSI report subframe m through parameter configuration. For example, the system or the base station considers that the downlink subframe 8 in the radio frame #a which belongs to the subframe group 2 more suitably reflects the CSI information of the subframe group 2 according to related information, and then sets the subframe to be a subframe on which the terminal is expected to acquire the CSI measurement result and which is used for CSI reporting.

### Embodiment six

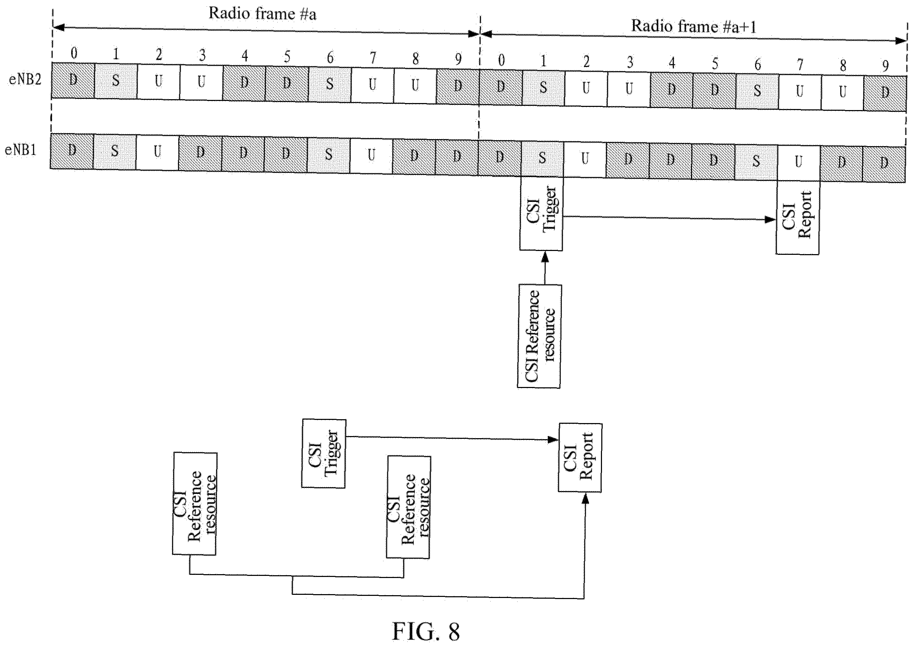

The embodiment of the present invention provides a method for measuring channel state information. The principle of implementing subframe grouping aperiodic CSI reporting using this method is shown in Fig. 8.

Assuming that an uplink-downlink configuration transmitted by eNB1 to a terminal through SIB1 is uplink-downlink configuration 1, and the eNB1 adjusts the used uplink-downlink configuration according to a current traffic load condition of a cell thereof to be uplink-downlink configuration 2; and assuming that eNB2 is a strong interference source cell of a downlink of the eNB1, and an uplink-downlink configuration which is currently used by the eNB2 is the uplink-downlink configuration 1.

The eNB1 divides downlink subframes (including special sub frames) into two subframe groups. Subframes {0, 1, 4, 5, 6, 9} belong to subframe group 1, and subframes {3, 8} belong to subframe group 2.

Assuming that the terminal receives aperiodic CSI report trigger information transmitted by the eNB1 over special subframe 6 of radio frame #a, and the terminal determines that aperiodic CSI reporting needs to be implemented for the subframe group 2 according to a rule predefined by the system.

Assuming that the terminal receives aperiodic CSI report trigger information transmitted by the eNB1 over special subframe 1 of radio frame #a+1, and the terminal determines that aperiodic CSI reporting needs to be implemented for the subframe group 1 according to a rule predefined by the system.

As the special subframe 6 which carries the aperiodic CSI report trigger information in the radio frame #a belongs to the subframe group 1, then, for the subframe group 2, the terminal implements aperiodic CSI reporting according to the solution in the embodiment of the present invention. Preferably, the terminal determines downlink subframe m-j which is located in the same radio frame as subframe n where the aperiodic CSI report trigger information is located and belongs to the subframe group 2 to be a CSI reference resource for the subframe group 2, wherein subframe n is the special subframe 6 of the radio frame #a, the subframe m is an uplink subframe 2 in the radio frame #a+1 on which the terminal implements aperiodic CSI reporting, the system predefines and sets j to be an integer which is greater than or equal to a positive integer t. Further, the system predefines and sets t=4, or t=4 is configured by RRC signaling. As the subframe 6 belongs to the radio frame #a, subframes in the radio frame which satisfy the above condition comprise subframes 8 and 3, and values of corresponding j are 4 and 9 respectively. Then the terminal determines subframes 8 and 3 in the radio frame #a to be CSI reference resources for the subframe group 2, and acquires CSI measurement results on the two subframes, implements averaging processing, generates a CSI report corresponding to the subframe group 2, and transmits the report to the eNB1 over the uplink subframe 2 of radio frame #a+1.

As the special subframe 1 which carries the aperiodic CSI report trigger information in the radio frame #a+1 belongs to the subframe group 1, then, for the subframe group 1, the terminal may implement aperiodic CSI reporting according to the related technology, i.e., the terminal determines the subframe 1 in the radio frame #a+1 to be a CSI reference resource for the subframe group 1, and acquires a CSI measurement result on the subframe, generates a CSI report corresponding to the subframe group 1, and transmits the report to the eNB1 over uplink subframe 7 of the radio frame #a+1.

In the embodiment of the present invention, the terminal may acquire CSI measurement results on multiple subframes, and after the averaging processing, a more reasonable CSI report can be provided to the base station. Further, the terminal acquires and uses a CSI measurement result on a subframe which is located after the subframe n where the aperiodic CSI report trigger information is located and satisfies a certain subframe interval away from an aperiodic CSI report subframe m.

### Embodiment seven

The embodiment of the present invention provides a method for measuring channel state information. The principle of implementing subframe grouping aperiodic CSI reporting using this method is shown in Fig. 7.

Assuming that an uplink-downlink configuration transmitted by eNB1 to a terminal through SIB1 is uplink-downlink configuration 1, and the eNB1 adjusts the used uplink-downlink configuration according to a current traffic load condition of a cell thereof to be uplink-downlink configuration 2; and assuming that eNB2 is a strong interference source cell of a downlink of the eNB1, and an uplink-downlink configuration which is currently used by the eNB2 is the uplink-downlink configuration 1.

The eNB1 divides downlink subframes (including special sub frames) into two subframe groups. Subframes {0, 1, 4, 5, 6, 9} belong to subframe group 1, and subframes {3, 8} belong to subframe group 2.

Assuming that the terminal receives aperiodic CSI report trigger information transmitted by the eNB1 over special subframe 6 of radio frame #a, and the terminal determines that aperiodic CSI reporting needs to be implemented for the subframe group 2 according to a rule predefined by the system.

Assuming that the terminal receives aperiodic CSI report trigger information transmitted by the eNB1 over special subframe 1 of radio frame #a+1, and the terminal determines that aperiodic CSI reporting needs to be implemented for the subframe group 1 according to a rule predefined by the system.

As the special subframe 6 which carries the aperiodic CSI report trigger information in the radio frame #a belongs to the subframe group 1, then, for the subframe group 2, the terminal implements aperiodic CSI reporting according to the solution in the embodiment of the present invention. Preferably, the terminal determines downlink subframe m-j which is located in the same radio frame as subframe n where the aperiodic CSI report trigger information is located and belongs to the subframe group 2 to be a CSI reference resource for the subframe group 2, wherein subframe n is the special subframe 6 of the radio frame #a, the subframe m is an uplink subframe 2 in the radio frame #a+1 on which the terminal implements aperiodic CSI reporting, the system predefines and sets j to be a minimum integer which is greater than or equal to a positive integer t. Further, the system predefines and sets t=4, or t=4 is configured by RRC signaling. Then the terminal determines the downlink subframe 8 in the radio frame #a which satisfies the above conditions to be a CSI reference resource for the subframe group 2, and acquires a CSI measurement result on the subframe, generates a CSI report corresponding to the subframe group 2, and transmits the report to the eNB1 over the uplink subframe 2 of radio frame #a+1.

As the special subframe 1 which carries the aperiodic CSI report trigger information in the radio frame #a+1 belongs to the subframe group 1, then, for the subframe group 1, the terminal may implement aperiodic CSI reporting according to the related technology, i.e., the terminal determines the subframe 1 in the radio frame #a+1 to be a CSI reference resource for the subframe group 1, and acquires a CSI measurement result on the subframe, generates a CSI report corresponding to the subframe group 1, and transmits the report to the eNB1 over uplink subframe 7 of the radio frame #a+1.

In the embodiment of the present invention, the terminal acquires and uses a CSI measurement result on a subframe which is located in the radio frame where the subframe n which carries the aperiodic CSI report trigger information is located and has a certain subframe interval away from an aperiodic CSI report subframe m and is closest to the aperiodic CSI report subframe m.

### Embodiment eight

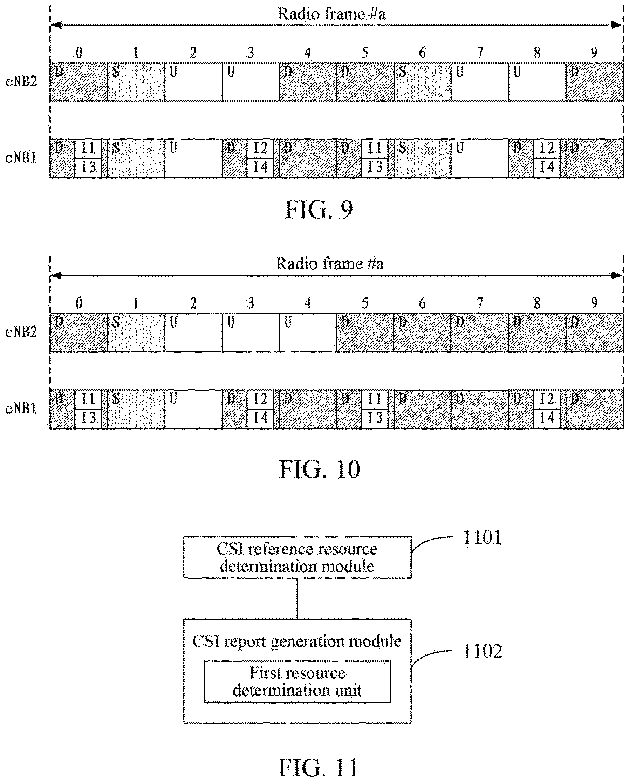

The embodiment of the present invention provides a method for measuring channel state information. When the transmission mode 10 is used, the principle of implementing CSI interference measurement resource configuration using this method is shown in Fig. 9.

Assuming that an uplink-downlink configuration transmitted by eNB1 to a terminal through SIB1 is uplink-downlink configuration 1, and the eNB1 adjusts the used uplink-downlink configuration according to a current traffic load condition of a cell thereof to be uplink-downlink configuration 2; and assuming that eNB2 is a strong interference source cell of a downlink of the eNB1, and an uplink-downlink configuration which is currently used by the eNB2 is the uplink-downlink configuration 1.

The eNB1 divides downlink subframes (including special sub frames) into two sub frame groups. Subframes {0, 1, 4, 5, 6, 9} belong to subframe group 1, and subframes {3, 8} belong to sub frame group 2.

In this embodiment, assuming that the eNB1 configures two CSI processes for a terminal which uses the transmission mode 10, the two CSI processes are CSI process 1 and CSI process 2 respectively.

The eNB1 configures CSI-IM resources overlapped with two zero power CSI-RS resource configurations for the CSI process 1 and the CSI process 2 of the terminal, which comprise I1 and I2 which are associated with the CSI process 1, and I3 and 14 which are associated with the CSI process 2, wherein I1 and I3 are located on the subframes 0 and 5, have a period of 5ms and a subframe offset of 0, and are overlapped with one zero power CSI-RS resource configuration, and 12 and 14 are located on the subframes 3 and 8, have a period of 5ms and a subframe offset of 3, and are overlapped with the other zero power CSI-RS resource configuration.

The eNB1 transmits the information of the CSI-IM resource configurations to the terminal, and according to information of subframe groups, the terminal can determine CSI-IM resources corresponding to different subframe groups, comprising I1 and I3 (associated with the CSI process 1 and the CSI process 2 respectively) which are located on the subframes 0 and 5 and correspond to the subframe group 1, and I2 and 14 (associated with the CSI process 1 and the CSI process 2 respectively) which are located on the subframes 3 and 8 and correspond to the subframe group 2. When CSI reporting needs to be implemented for a specified CSI process and a specified subframe group, the terminal can determine a corresponding subframe to be a CSI reference resource according to a CSI reference resource determination rule, acquires an interference measurement result obtained on a CSI-IM resource corresponding to the specified CSI process and the specified subframe group, and acquires a CSI measurement result, generates a CSI report, and transmits the report to the eNB1.

Further, the eNB1 further transmits information of the two zero power CSI-RS resource configurations to the terminal, for the terminal device to implement data transmission rate matching on a corresponding subframe.

### Embodiment nine

The embodiment of the present invention provides a method for measuring channel state information. When the transmission mode 10 is used, the principle of implementing CSI interference measurement resource configuration using this method is shown in Fig. 10.

Assuming that an uplink-downlink configuration transmitted by eNB1 to a terminal through SIB1 is uplink-downlink configuration 3, and the eNB1 adjusts the used uplink-downlink configuration according to a current traffic load condition of a cell thereof to be uplink-downlink configuration 5; and assuming that eNB2 is a strong interference source cell of a downlink of the eNB1, and an uplink-downlink configuration which is currently used by the eNB2 is the uplink-downlink configuration 3.

The eNB1 divides downlink subframes (including special subframes) into two subframe groups. Subframes {0, 1, 5, 6, 7, 8, 9} belong to subframe group 1, and subframes {3, 4} belong to subframe group 2.

In this embodiment, assuming that the eNB1 configures two CSI processes for a terminal which uses the transmission mode 10, the two CSI processes are CSI process 1 and CSI process 2 respectively.

The eNB1 configures CSI-IM resources overlapped with two zero power CSI-RS resource configurations for the CSI process 1 and the CSI process 2 of the terminal, which comprise I1 and I2 associated with the CSI process 1, and I3 and 14 associated with the CSI process 2, wherein I1 and I3 are located on the subframes 0 and 5, have a period of 5ms and a subframe offset of 0, and are overlapped with one zero power CSI-RS resource configuration, and 12 and 14 are located on the subframes 3 and 8, have a period of 5ms and a subframe offset of 3, and are overlapped with the other zero power CSI-RS resource configuration.

The eNB1 transmits the information of the CSI-IM resource configurations to the terminal, and according to information of subframe groups, the terminal can determine CSI-IM resources corresponding to different subframe groups, comprising I1 and I3 (associated with the CSI process 1 and the CSI process 2 respectively) which are located on the subframes 0 and 5 and correspond to the subframe group 1, and I2 and 14 (associated with the CSI process 1 and the CSI process 2 respectively) which are located on the subframe 8 and correspond to the subframe group 1, and I2 and 14 (associated with the CSI process 1 and the CSI process 2 respectively) which are located on the subframe 3 and correspond to the subframe group 2. When CSI reporting needs to be implemented for a specified CSI process and a specified subframe group, the terminal can determine a corresponding subframe to be a CSI reference resource according to a CSI reference resource determination rule, acquires an interference measurement result obtained on a CSI-IM resource corresponding to the specified CSI process and the specified subframe group, and acquires a CSI measurement result, generates a CSI report, and transmits the report to the eNB 1.

Further, the eNB1 further transmits information of the two zero power CSI-RS resource configurations to the terminal, so that the terminal device implements data transmission rate matching on a corresponding subframe.

### Embodiment ten

The embodiment of the present invention provides an apparatus for measuring channel state information. A structure of the apparatus is shown in Fig. 11, and comprises:
a CSI reference resource determination module 1101 configured to determine one or more downlink subframes which are located before a subframe where aperiodic CSI report trigger information is located and belong to a specified subframe group to be CSI reference resources for the specified subframe group; and
a CSI report generation module 1102 configured to acquire a CSI measurement result on the CSI reference resources and generate a CSI report corresponding to the specified subframe group.

Preferably, the CSI reference resource determination module 1101 comprises:
a first resource determination unit configured to determine a downlink subframe n-i which belongs to the specified subframe group to be a CSI reference resource for the specified subframe group,
wherein n is a subframe where the aperiodic CSI report trigger information is located and i is an integer greater than or equal to a non-negative integer s.

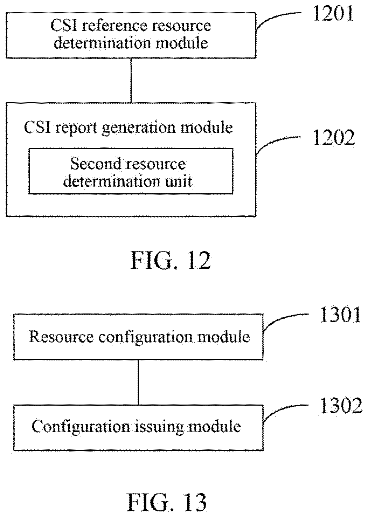

The embodiment of the present invention further provides an apparatus for measuring channel state information. A structure of the apparatus is shown in Fig. 12, and comprises:
a CSI reference resource determination module 1201 configured to determine one or more downlink subframes which are located before an aperiodic CSI report subframe and in the same radio frame with a subframe where aperiodic CSI report trigger information is located and belong to a specified subframe group to be CSI reference resources for the specified subframe group; and
a CSI report generation module 1202 configured to acquire a CSI measurement result on the CSI reference resources and generate a CSI report corresponding to the specified subframe group.

Preferably, the CSI reference resource determination module 1201 comprises:
a second resource determination unit configured to determine a downlink subframe m-j which is located in the same radio frame with the subframe where aperiodic CSI report trigger information is located and belongs to the specified subframe group to be a CSI reference resource for the specified subframe group,
wherein m is an uplink subframe where the terminal implements aperiodic CSI reporting and j is an integer greater than or equal to a positive integer t.

The apparatuses for measuring channel state information illustrated in Figs. 11 and 12 may be integrated into a terminal device, and corresponding functions may be completed by the terminal device.

The embodiment of the present invention further provides an apparatus for measuring channel state information. When the transmission module 10 is used, the apparatus may be used for implementing CSI interference measurement resource configuration. A structure of the apparatus is shown in Fig. 13, and comprises:
a resource configuration module 1301 configured to configure CSI interference measurement resources overlapped with two zero power CSI reference signal resource configurations for all CSI processes of a specified terminal device; and
a configuration issuing module 1302 configured to transmit configuration information of the CSI interference measurement resources to the specified terminal device, for the specified terminal device to determine CSI reference resources and/or CSI interference measurement resources for the specified subframe group.

Preferably, the configuration issuing module 1302 is further configured to transmit information of the two zero power CSI reference signal resource configurations to the specified terminal device, for the specified terminal device to implement data transmission rate matching.

The apparatus for measuring channel state information illustrated in Fig. 13 may be integrated into a base station, and corresponding functions may be completed by the base station.

The embodiment of the present invention further provides a computer program comprising program instructions, when the program instructions are implemented by a terminal device, the terminal device can implement the above method.

The embodiment of the present invention further provides a computer program comprising program instructions when the program instructions are implemented by a base station, the base station can implement the above method.

The embodiment of the present invention further provides a carrier carrying any of the above computer programs.

The embodiments of the present invention provide a method and apparatus for measuring channel state information. At a terminal device side, the terminal device determines one or more downlink subframes which are located before a subframe where aperiodic CSI report trigger information is located and belong to a specified subframe group to be CSI reference resources for the specified subframe group, or the terminal device determines one or more downlink subframes which are located before an aperiodic CSI report sub frame and in the same radio frame as a subframe where aperiodic CSI report trigger information is located and belong to a specified subframe group to be CSI reference resources for the specified subframe group, and after determining the CSI reference resources, the terminal device acquires a CSI measurement result on the CSI reference resources and generates a CSI report corresponding to the specified subframe group. At a base station side, the base station configures CSI interference measurement resources overlapped with two zero power CSI reference signal resource configurations for all CSI processes of a specified terminal device; and transmits the corresponding configuration information to the specified terminal device, so that the specified terminal device determines CSI reference resources and/or CSI interference measurement resources for the specified subframe group. The embodiments of the present invention achieve that the terminal effectively acquires CSI measurement results corresponding to different subframe groups and implements CSI reporting, and solves the problem that the terminal cannot effectively determine CSI reference resources when implementing subframe grouping aperiodic CSI reporting due to flexible adjustment of an uplink-downlink configuration by a base station.

In the technical solution according to the embodiments of the present invention, when the terminal implements subframe grouping aperiodic CSI reporting, the terminal determines CSI reference resources for a specified subframe group according to a subframe or a radio frame where aperiodic CSI report trigger information is located, which effectively solves the problem in the related technology that a terminal cannot effectively determine CSI reference resources when implementing subframe grouping aperiodic CSI reporting due to flexible adjustment of an uplink-downlink configuration by a base station, thereby ensuring the capability of the terminal effectively acquiring CSI measurement results corresponding to different subframe groups and implementing CSI reporting, and achieving the technical effect of improving the data transmission performance of the system.

A person having ordinary skill in the art can understand that all or part of steps in the above embodiments can be implemented by a computer program flow, the computer program can be stored in a computer readable storage medium, is performed on a corresponding hardware platform (for example, a system, a device, an apparatus, and a component etc.), and when performed, comprises one of steps of the method embodiment or a combination thereof.

Alternatively, all or part of steps in the above embodiments can also be implemented by integrated circuits, these steps can be respectively made into a plurality of integrated circuit modules; alternatively, it is implemented with making several modules or steps of them into a single integrated circuit module. Thus, the present invention is not limited to any specific combinations of hardware and software.

Each apparatus, functional module or functional unit in the aforementioned embodiments can be implemented with general computing apparatuses, and can be integrated in a single computing apparatus, or can also be distributed onto a network consisting of a plurality of computing apparatuses.

When each apparatus, functional module or functional unit in the aforementioned embodiments is implemented in a form of software functional modules and is sold or used as an independent product, it can be stored in a computer readable storage medium, which may be a read-only memory, a disk or a disc etc.

Changes or substitutions which can easily be reached by a person having ordinary skill in the art within the technical scope disclosed by the present invention should be included in the protection scope of the present invention. Therefore, the protection scope of the present invention is defined by the protection scope of the claims.

### Industrial applicability

The embodiments of the present invention achieve the object that the terminal effectively acquires CSI measurement results corresponding to different subframe groups and implements CSI reporting, and solve the problem that the terminal cannot effectively determine CSI reference resources when implementing subframe grouping aperiodic CSI reporting due to flexible adjustment of an uplink-downlink configuration by a base station.

## Claims

1. A method for measuring Channel State Information (CSI), comprising:
a terminal device determining one or more downlink subframes which are located before a subframe where aperiodic CSI report trigger information is located and belong to a specified subframe group to be CSI reference resources for the specified subframe group; and
the terminal device acquiring a CSI measurement result on the CSI reference resources and generating a CSI report corresponding to the specified subframe group.

2. The method for measuring CSI according to claim 1, wherein a terminal device determining one or more downlink subframes which are located before a subframe where aperiodic CSI report trigger information is located and belong to a specified subframe group to be CSI reference resources for the specified subframe group comprises:
the terminal device determining a downlink subframe with a subframe number of n-i which belongs to a specified subframe group to be a CSI reference resource for the specified subframe group,
wherein n is a subframe number of a subframe where the aperiodic CSI report trigger information is located and i is an integer greater than or equal to a non-negative integer s.

3. The method for measuring CSI according to claim 2, wherein a radio frame where the downlink subframe with a subframe number of n-i is located and a radio frame where a downlink subframe with a subframe number of n is located are the same radio frame.

4. The method for measuring CSI according to claim 2, wherein the radio frame where the downlink subframe with a subframe number of n-i is located is a radio frame within a range of x radio frames before the radio frame where the downlink subframe with a subframe number of n is located, where x is an integer greater than or equal to 1.

5. The method for measuring CSI according to claim 2, wherein i is a minimum integer greater than or equal to the non-negative integer s.

6. The method for measuring CSI according to claim 2, wherein the non-negative integer s is predefined and set by a system or is configured by Radio Resource Control (RRC) signaling.

7. The method for measuring CSI according to claim 1, wherein the downlink subframes comprise downlink subframes D and special sub frames S.

8. The method for measuring CSI according to claim 1, wherein the specified subframe group is a subframe group for which aperiodic CSI reporting needs to be implemented, which is determined by the terminal device according to a system predetermined rule.

9. A method for measuring Channel State Information (CSI), comprising:
a terminal device determining one or more downlink subframes which are located before an aperiodic CSI report subframe and in a same radio frame with a subframe where aperiodic CSI report trigger information is located and belong to a specified subframe group to be CSI reference resources for the specified subframe group; and
the terminal device acquiring a CSI measurement result on the CSI reference resources and generating a CSI report corresponding to the specified subframe group.

10. The method for measuring CSI according to claim 9, wherein a terminal device determining one or more downlink subframes which are located before an aperiodic CSI report subframe and in a same radio frame with a subframe where aperiodic CSI report trigger information is located and belong to a specified subframe group to be CSI reference resources for the specified subframe group comprises:
the terminal device determining a downlink subframe with a subframe number of m-j which is located in the same radio frame with the subframe where the aperiodic CSI report trigger information is located and belongs to the specified subframe group to be a CSI reference resource for the specified subframe group,
wherein m is a subframe number of an uplink subframe where the terminal implements aperiodic CSI reporting and j is an integer greater than or equal to a positive integer t.

11. The method for measuring CSI according to claim 10, wherein the j is a minimum integer greater than or equal to the positive integer t.

12. The method for measuring CSI according to claim 10, wherein the positive integer t is predefined and set by a system or is configured by Radio Resource Control (RRC) signaling.

13. The method for measuring CSI according to claim 9, wherein the downlink subframes comprise downlink subframes D and special subframes S.

14. The method for measuring CSI according to claim 9, wherein the specified subframe group is a subframe group for which aperiodic CSI reporting needs to be implemented, which is determined by the terminal device according to a system predetermined rule.

15. A method for measuring Channel State Information (CSI), comprising:
a base station configuring CSI interference measurement resources overlapped with two zero power CSI reference signal resource configurations for all CSI processes of a specified terminal device; and
the base station transmitting configuration information of the CSI interference measurement resources to the specified terminal device, for the specified terminal device to determine CSI reference resources and/or CSI interference measurement resources for the specified subframe group.

16. The method for measuring CSI according to claim 15, wherein the CSI interference measurement resources overlapped with two zero power CSI reference signal resource configurations respectively correspond to different subframes or different subframe groups.

17. The method for measuring CSI according to claim 16, wherein the different subframes belong to a same subframe group or belong to different subframe groups.

18. The method for measuring CSI according to claim 15, wherein periods and/or subframe offsets of the two zero power CSI reference signal resource configurations are different.

19. The method for measuring CSI according to claim 15, further comprising:
the base station transmitting information of the two zero power CSI reference signal resource configurations to the specified terminal device, for the specified terminal device to implement data transmission rate matching.

20. An apparatus for measuring Channel State Information (CSI), comprising:
a CSI reference resource determination module configured to determine one or more downlink subframes which are located before a subframe where aperiodic CSI report trigger information is located and belong to a specified subframe group to be CSI reference resources for the specified subframe group; and
a CSI report generation module configured to acquire a CSI measurement result on the CSI reference resources and generate a CSI report corresponding to the specified subframe group.

21. The apparatus for measuring CSI according to claim 20, wherein the CSI reference resource determination module comprises:
a first resource determination unit configured to determine a downlink subframe with a subframe number of n-i which belongs to the specified subframe group to be a CSI reference resource for the specified subframe group,
wherein n is a subframe number of a subframe where the aperiodic CSI report trigger information is located and i is an integer greater than or equal to a non-negative integer s.

22. An apparatus for measuring Channel State Information (CSI), comprising:
a CSI reference resource determination module configured to determine one or more downlink subframes which are located before an aperiodic CSI report subframe and in a same radio frame with a subframe where aperiodic CSI report trigger information is located and belong to a specified subframe group to be CSI reference resources for the specified subframe group; and
a CSI report generation module configured to acquire a CSI measurement result on the CSI reference resources and generate a CSI report corresponding to the specified subframe group.

23. The apparatus for measuring CSI according to claim 22, wherein the CSI reference resource determination module comprises:
a second resource determination unit configured to determine a downlink subframe with a subframe number of m-j which is located in the same radio frame with the subframe where aperiodic CSI report trigger information is located and belongs to the specified subframe group to be a CSI reference resource for the specified subframe group,
wherein m is a subframe number of an uplink subframe where the terminal implements aperiodic CSI reporting and j is an integer greater than or equal to a positive integer t.

24. An apparatus for measuring Channel State Information (CSI), comprising:
a resource configuration module configured to configure CSI interference measurement resources overlapped with two zero power CSI reference signal resource configurations for all CSI processes of a specified terminal device; and
a configuration issuing module configured to transmit configuration information of the CSI interference measurement resources to the specified terminal device, for the specified terminal device to determine CSI reference resources and/or CSI interference measurement resources for the specified sub frame group.

25. The apparatus for measuring CSI according to claim 24, wherein the configuration issuing module is further configured to transmit information of the two zero power CSI reference signal resource configurations to the specified terminal device, for the specified terminal device to implement data transmission rate matching.

26. A computer program, comprising program instructions, which, when executed by a terminal device, enable the terminal device to implement the method according to any of claims 1-14.

27. A computer program, comprising program instructions, which, when executed by a base station, enable the base station to implement the method according to any of claims 15-19.

28. A carrier carrying the computer program according to claim 26 or 27.
